# EUROPÄISCHE PATENTSCHRIFT

(11) **EP 1 466 317 B1**
(45) Veröffentlichungstag und Bekanntmachung des Hinweises auf die Patenterteilung: **18.04.2007**
(21) Anmeldenummer: 03708045.4
(22) Anmeldetag: 02.01.2003
(51) Int. Cl.: G10L 15/00, G10L 15/14, G10L 15/16

(54) **BETRIEBSVERFAHREN EINES AUTOMATISCHEN SPRACHERKENNERS ZUR SPRECHERUNABHÄNGIGEN SPRACHERKENNUNG VON WORTEN AUS VERSCHIEDENEN SPRACHEN UND AUTOMATISCHER SPRACHERKENNER**
OPERATING METHOD FOR AN AUTOMATED LANGUAGE RECOGNIZER INTENDED FOR THE SPEAKER-INDEPENDENT LANGUAGE RECOGNITION OF WORDS IN DIFFERENT LANGUAGES AND AUTOMATED LANGUAGE RECOGNIZER
PROCEDE D'EXPLOITATION D'UN SYSTEME DE RECONNAISSANCE VOCALE AUTOMATIQUE POUR LA RECONNAISSANCE VOCALE MULTILOCUTEUR DE MOTS DE DIFFERENTES LANGUES ET SYSTEME DE RECONNAISSANCE VOCALE AUTOMATIQUE

(30) Priorität: 17.01.2002 EP 02001256
(43) Veröffentlichungstag der Anmeldung: 13.10.2004
(73) Patentinhaber: SIEMENS AKTIENGESELLSCHAFT, 80333 München (DE)
(72) Erfinder: SCHNEIDER, Tobias, 47441 Moers (DE)
(86) Internationale Anmeldenummer: PCT/EP2003/000003
(87) Internationale Veröffentlichungsnummer: WO 2003/060877

(56) Entgegenhaltungen:
- WO-A-95/02879
- US-A- 5 805 771
- US-A- 6 085 160
- US-B1- 6 212 500
- MUTHUSAMY Y K ET AL: "AUTOMATIC SEGMENTATION AND IDENTIFICATION OF TEN LANGUAGES USING TELEPHONE SPEECH" PROCEEDINGS OF THE INTERNATIONAL CONFERENCE ON SPOKEN LANGUAGE PROCESSING (ICSLP). BANFF, Bd. 2, 12. - 16. Oktober 1992, Seiten 1007-1010, XP000871623 EDMONTON, UNIVERSITY OF ALBERTA, CA
- VAICH T ET AL: "HMM phoneme recognition with supervised training and Viterbi algorithm" EIGHTEENTH CONVENTION OF ELECTRICAL AND ELECTRONICS ENGINEERS IN ISRAEL (CAT. NO.95TH8044), TEL AVIV, ISRAEL, 7. - 8. März 1995, Seiten 3.2.1/1-5, XP002198892 1995, New York, NY, USA, IEEE, USA ISBN: 0-7803-2498-6
- ANDERSON O ET AL: "THE ONOMASTICA INTERLANGUAGE PRONUNCIATION LEXICON" 4TH EUROPEAN CONFERENCE ON SPEECH COMMUNICATION AND TECHNOLOGY. EUROSPEECH '95. MADRID, SPAIN, Bd. 1 CONF. 4, 18. - 21. September 1995, Seiten 829-832, XP000854833 MADRID: GRAFICAS BRENS, ES

## Beschreibung

Die Erfindung betrifft ein Betriebsverfahren eines automatischen Spracherkenners zur sprecherunabhängigen Spracherkennung von Worten aus verschiedenen Sprachen gemäß Patentanspruch 1 und einen entsprechenden automatischen Spracherkenner gemäß Patentanspruch 6.

Für die phonembasierte Spracherkennung ist ein Spracherkennungs-Vokabular erforderlich, das die phonetischen Beschreibungen aller zu erkennender Wörter umfaßt. Dies ist eine Grundvoraussetzung für die phonembasierte Spracherkennung. Wörter werden hierbei durch Phonemfolgen oder -ketten im Vokabular repräsentiert. Während eines Spracherkennungs-Vorgangs wird eine Suche nach dem besten Pfad durch die Phonemfolgen im Vokabular durchgeführt. Diese Suche kann beispielsweise mit dem sogenannten Viterbi-Algorithmus erfolgen. Bei kontinuierlicher Spracherkennung können zudem die Wahrscheinlichkeiten für Übergange zwischen Wörtern modelliert und in den Viterbi-Algorithmus einbezogen werden.

Die phonetischen Umschriften für die zu erkennenden Wörter sind die Basis der phonembasierten Spracherkennung. Daher stellt sich zu Beginn des Einsatzes eines phonembasierten Spracherkenners immer die Frage, wie derartige phonetische Umschriften gewonnen werden können. Unter phonetischen Umschriften werden hier die phonetischen Beschreibungen der Wörter aus einem Zielvokabular verstanden. Insbesondere stellt sich diese Frage bei Wörtern, die dem Spracherkenner nicht bekannt sind.

Bekannt sind Mobil- oder Schnurlostelefone, die eine sprecherabhängige Namenswahl ermöglichen. Ein Benutzer eines derartigen Telefons muß hierzu die im elektronischen Telefonbuch des Telefons enthaltenen Einträge trainieren, um diese später zur Namenswahl per Sprache nutzen zu können. Allerdings kann in der Regel kein anderer Benutzer dieses Feature nutzen, da die sprecherabhängige Namenswahl nur für eine Person geeignet ist, nämlich für diejenige, welche die Sprachwahl trainiert hat. Um dieses Problem zu umgehen, können die Einträge im elektronischen Telefonbuch in phonetische Umschriften umgewandelt werden.

Zum Ermitteln der phonetischen Umschrift aus einem geschriebenen Wort, beispielsweise einem Telefonbucheintrag, sind unterschiedliche Ansätze bekannt. Es sei hier beispielsweise auf die sogenannten Diktiersysteme, die im allgemeinen auf einem PC zur Ausführung kommen, verwiesen. Bei derartigen Diktiersystemen ist im Normalfall ein Lexikon von typischerweise mehreren 10000 Wörtern mit den Zuordnungen von Buchstabenfolgen zu Phonemfolgen hinterlegt. Da ein solches Lexikon allerdings einen sehr hohen Speicherplatzbedarf aufweist, ist es für mobile Endgeräte wie beispielsweise Mobil- oder Schnurlostelefone nicht praktikabel.

Bekannt sind auch Systeme, bei denen die Umsetzung eines Wortes in dessen phonetische Umschrift regelbasiert oder durch speziell trainierte neuronale Netze erfolgt. Diese Verfahren besitzen wie das Lexikon den Nachteil, daß festgelegt werden muß, in welcher Sprache die Phonemfolge realisiert werden soll. Allerdings können insbesondere in elektronischen Telefonbüchern Namen aus verschiedenen Sprachen vorhanden sein. Eine Umsetzung wäre dann mit dem oben beschriebenen Verfahren nicht oder nur unvollständig möglich.

Daher wurden sogenannte multilinguale Systeme zur Phonemkettenermittlung und Spracherkennung entworfen. Diese Systeme erlauben die Erzeugung von Phonemketten aus verschiedenen Sprachen sowie im WO0009986.

Schließlich existiert noch eine andere Lösung: Ein Benutzer spricht die Worte in ein Spracherkennungssystem ein, das daraus automatisch Phonemfolgen generiert. Bei großen Wortschätzen, aber auch schon bei einigen dutzend Wörtern, wie beispielsweise bei einem elektronischen Telefonbuch mit 80 Einträgen, ist dies für den Benutzer nicht mehr akzeptabel.

Aufgabe der vorliegenden Erfindung ist es daher, ein Betriebsverfahrens eines automatischen Spracherkenners zur sprecherunabhängigen Spracherkennung von Worten aus verschiedenen Sprachen sowie einen entsprechenden automatischen Spracherkenner vorzuschlagen, welche einfach zu implementieren sind, sich insbesondere zum Einsatz in mobilen Endgeräten eignen, und kostengünstig zu realisieren sind.

Diese Aufgabe wird durch ein Betriebsverfahren mit den Merkmalen des Patentanspruchs 1 und durch einen automatischen Spracherkenner mit den Merkmalen des Patentanspruchs 6 gelöst.

Der Erfindung liegt im wesentlichen die Idee zugrunde, phonetische Umschriften von Wörtern jeweils für N-verschiedene Sprachen zu ermitteln, diese anschließend nachzuverarbeiten und einer phonembasierten einsprachigen Spracherkennung zuzuführen. Diese Vorgehensweise beruht im wesentlichen auf der Erkenntnis, daß ein Benutzer der Spracherkennung normalerweise in seiner Muttersprache spricht. Auch fremdsprachige Wörter, beispielsweise Namen, spricht er normalerweise mit einer "Muttersprachenfärbung", also einem Akzent aus, die bzw. der durch einen sogenannten Muttersprachen-Spracherkenner grob modelliert werden kann. Das Betriebsverfahren geht daher von einer als Muttersprache definierten Sprache aus.

Jede Sprache läßt sich nun mit unterschiedlichen, der jeweiligen Sprache eigenen Phonemen beschreiben. Bekanntermaßen ähneln sich jedoch viele Phoneme verschiedener Sprachen. Ein Beispiel hierfür ist das "p" im englischen und deutschen.

Diese Tatsache wird bei der multilingualen Spracherkennung ausgenutzt. Für ein Ensemble von Sprachen wird hier ein einziges Hidden-Markov-Modell erstellt, mit dem simultan mehrere Sprachen erkannt werden können. Allerdings führt dies zu einem sehr großen Hidden-Markov-Modell, das eine niedrigere Erkennungsrate als ein einsprachiges Hidden-Markov-Modell besitzt. Zudem muß bei einer Erweiterung des Ensembles von Sprachen um beispielsweise eine weitere Sprache ein neues Hidden-Markov-Modell erstellt werden, was sehr aufwendig ist. Dies wird mit der Erfindung vermieden.

Erfindungsgemäß werden in einem ersten Schritt der Eingabephase zur Erstellung eines Spracherkenner-Vokabulars eines Betriebsverfahrens eines automatischen Spracherkenners zur sprecherunabhängigen Spracherkennung von Worten aus verschiedenen Sprachen, insbesondere von Erkennung von Namen aus verschiedenen Sprachen, die phonetischen Umschriften von Wörtern jeweils für N-verschiedene Sprachen ermittelt, um pro Wort N-erste Phonemfolgen entsprechend N-ersten Aussprachevarianten zu erhalten. In einem zweiten Schritt werden die Ähnlichkeiten zwischen den Sprachen ausgenutzt. Hierzu wird eine Abbildung der Phoneme jeder Sprache auf den jeweiligen Phonemsatz der Muttersprache implementiert. Ferner wird in einem dritten Schritt die implementierte Abbildung auf die im ersten Schritt ermittelten N-ersten Phonemfolgen für jedes Wort angewandt. Dadurch werden pro Wort N-zweite Phonemfolgen entsprechend N-zweiten Aussprachevarianten erhalten. Mit dem Muttersprachen-Spracherkenner kann dann bereits eine Anzahl N-verschiedener Sprachen nach Erstellen eines Spracherkenner-Vokabulars mit den im vorhergehenden Schritt erhaltenenen N-zweiten Phonemfolgen pro Wort für den Muttersprachen-Spracherkenner erkannt werden.

Die Erfindung hat im wesentlichen die folgenden Vorteile: Während ein Look-up-Verfahren in einem Lexikon bei mobilen Endgeräten wegen des großen Speicherplatzbedarfs scheitert und bei der multilingualen Spracherkennung, die für einen Satz von Sprachen optimiert wurde, für jede neue Sprache neue Hidden-Markov-Modelle erstellt und optimiert werden müssen, wird durch die Grapheme/Phoneme-Konversion in mehrere Sprachen gemäß der Erfindung ein multilinguales System geschaffen, das mit relativ einfachen Mitteln zu implementieren ist, sich daher vor allem zum Einsatz in mobilen Endgeräten eignet und nicht zuletzt kostengünstig zu realisieren ist. Für die Erfindung ist neben der Graphem-zu-Phonem-Umwandlung im wesentlichen nur noch ein Mapping, d. h. ein Abbilden zwischen den einzelnen Sprachen - wie oben erläutert - erforderlich. Die Phonemfolgen-Ermittlung und das anschließende Mapping bzw. Abbilden laufen normalerweise "offline" auf einem Gerät ab, beispielsweise einem Mobiltelefon, einem Personal Digital Assistant oder Personal Computer mit entsprechender Software, und sind daher zeitunkritisch. Die hierfür benötigten Ressourcen können in einem langsamen externen Speicher untergebracht werden.

Da das mit dem oben beschriebenen Verfahren erstellte Spracherkenner-Vokabular jedoch für jedes Wort N-Aussprachevarianten umfaßt, ist der Suchaufwand bei der Spracherkennung groß. Um ihn zu verringern, kann ein weiterer Schritt in das Verfahren eingeführt werden, der noch vor dem Erstellen des Spracherkenner-Vokabulars und nach dem Erzeugen der N-zweiten Phonemfolgen pro Wort ausgeführt wird. In diesem Schritt werden die N-zweiten Phonemfolgen entsprechend den N-zweiten Aussprachevarianten jedes Wort bearbeitet, indem jede zweite Phonemfolge mittels geeigneter Distanzen, insbesondere der Levenshtein-Distanz, analysiert und klassifiziert wird, und die N-zweiten Phonemfolgen jedes Wortes auf wenige, vorzugsweise zwei bis drei, Phonemfolgen reduziert werden, insbesondere indem die Aussprachevarianten weggelassen werden, die der Aussprachevariante der Muttersprache am wenigsten ähnlich sind. Vereinfacht ausgedrückt werden durch diese Reduzierung die weniger wichtigen Aussprachevarianten weggelassen, wodurch sich der Suchaufwand bei der Spracherkennung verringert.

Eine weitere Aufwandsreduktion läßt sich erreichen, indem vor dem ersten Schritt eine Sprachidentifikation und -reduktion vorgenommen wird. Im Rahmen dieser Sprachidentifikation wird für jedes zu erkennende Wort die Wahrscheinlichkeit der Zugehörigkeit zu jeder der N-verschiedenen Sprachen bestimmt. Anhand des Ergebnisses dieser Sprachidentifikation wird die Anzahl der im ersten Verfahrensschritt zu verarbeitenden Sprachen, vorzugsweise auf zwei bis drei verschiedene Sprachen, reduziert. Diese Sprachreduktion erfolgt vorzugsweise, indem die Sprachen mit der geringsten Wahrscheinlichkeit nicht weiterverarbeitet werden. Für ein bestimmtes Wort kann das Ergebnis der Sprachidentifikation beispielsweise wie folgt lauten: "Deutsch 55%, UK-Englisch 16%, US-Englisch 14%, Schwedisch 3%, ...". Bereits nach diesem Ergebnis kann auf drei verschiedene Sprachen reduziert werden, indem Schwedisch weggelassen, d. h. nicht weiterverarbeitet wird.

Das Ermitteln der phonetischen Umschriften im ersten Verfahrensschritt erfolgt vorzugsweise durch mindestens ein neuronales Netz. Neuronale Netze haben sich zum Ermitteln phonetischer Umschriften aus geschriebenen Worten bewährt, da sie gute Ergebnisse hinsichtlich der Genauigkeit und vor allem Verarbeitungsgeschwindigkeit liefern sowie einfach, insbesondere in Software implementierbar sind.

Als Muttersprachen-Spracherkenner kann insbesondere ein Hidden-Markov-Modell zum Einsatz kommen, das für die als Muttersprache definierte Sprache erstellt worden ist.

Die Erfindung betrifft ferner einen Spracherkenner zur sprecherunabhängigen Spracherkennung von Worten aus verschiedenen Sprachen, insbesondere zur Erkennung von Namen aus verschiedenen Sprachen. Hierbei ist eine der verschiedenen Sprachen als Muttersprache definiert. Der Spracherkenner umfaßt
- einen Muttersprachen-Spracherkenner,
- ein erstes Verarbeitungsmodul zum Ermitteln der phonetischen Umschriften von Wörtern jeweils für N-verschiedene Sprachen, um pro Wort N-erste Phonemfolgen entsprechend N-ersten Aussprachevarianten zu erhalten,
- ein zweites Verarbeitungsmodul zum Implementieren einer Abbildung der Phonem jeder Sprache auf dem jeweiligen Phonemsatz der Muttersprache,
- ein drittes Verarbeitungsmodul zum Anwenden der mit dem zweiten Verarbeitungsmodul implementierten Abbildung auf die mit dem ersten Verarbeitungsmodul ermittelten N-ersten Phonemfolgen für jedes Wort, wodurch pro Wort N-zweite Phonemfolgen entsprechend N-zweiten Aussprachevarianten erhalten werden, die mit dem Muttersprachen-Spracherkenner erkannt werden können und
- ein viertes Verarbeitungsmodul zum Erstellen eines Spracherkenner-Vokabulars mit den durch das dritte Verarbeitungsmodul erhaltenen N-zweiten Phonemfolgen pro Wort für den Muttersprachen-Spracherkenner.

In einer bevorzugten Ausführungsform umfaßt der automatische Spracherkenner ein fünftes Verarbeitungsmodul zum Bearbeiten der N-zweiten Phonemfolgen entsprechend den N-zweiten Aussprachevarianten jedes Wortes. Das fünfte Verarbeitungsmodul ist derart ausgebildet, daß jede zweite Phonemfolge mittels geeigneter Distanzen, insbesondere der Levenshtein-Distanz, analysiert und klassifiziert wird, und die N-zweiten Phonemfolgen jedes Wortes auf wenige, vorzugsweise zwei bis drei, Phonemfolgen reduziert werden.

Ferner kann der automatische Spracherkenner einen Sprachidentifikator und einen Sprachreduzierer umfassen. Der Sprachidentifikator ist vor das erste Verarbeitungsmodul geschaltet und bestimmt für jedes zu erkennende Wort die Wahrscheinlichkeit der Zugehörigkeit zu jeder der N-verschiedenen Sprachen. Der Sprachreduzierer reduziert die Anzahl der vom ersten Verarbeitungsmodul zu verarbeitenden Sprachen, vorzugsweise auf zwei bis drei verschiedene Sprachen, indem die Sprachen mit der geringsten Wahrscheinlichkeit nicht weiterverarbeitet werden. Sprachidentifikator und Sprachreduzierer verringern sowohl den Verarbeitungsaufwand des automatischen Spracherkenners sowohl in der Eingabephase als auch in der Erkennungsphase beträchtlich.

Vorzugsweise weist das erste Verarbeitungsmodul mindestens ein neuronales Netz zum Ermitteln der phonetischen Umschriften auf.

Schließlich weist der Muttersprachen-Spracherkenner in einer bevorzugten Ausführungsform ein Hidden-Markov-Modell auf, das für die als Muttersprache definierte Sprache erstellt worden ist.

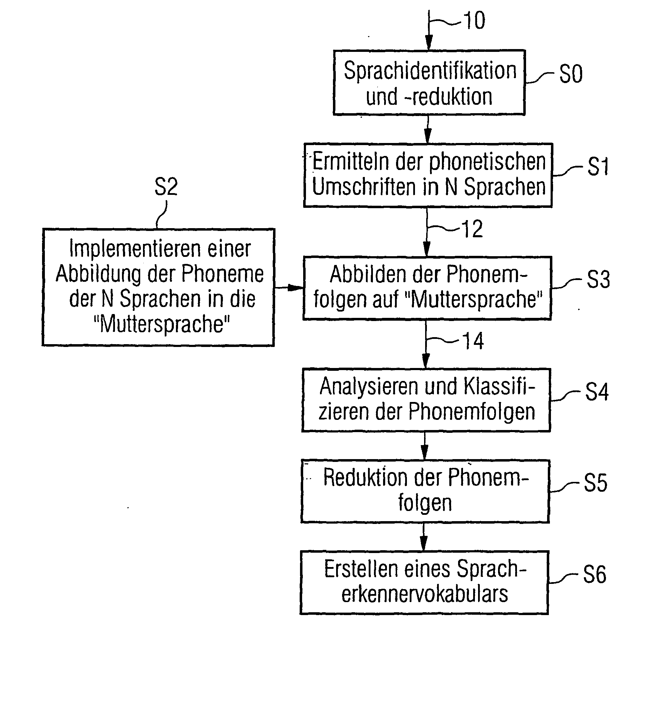

Vorteile und Zweckmäßigkeiten der Erfindung ergeben sich im übrigen aus der nachfolgenden Beschreibung eines Ausführungsbeispiels der Erfindung anhand der einzigen Figur. Diese zeigt ein schematisches Ablaufdiagramm der Eingabephase zur Erstellung eines Spracherkenner-Vokabulars gemäß der Erfindung.

Es soll die sprecherabhängige Namenswahl auf einem Mobiltelefon mit den Namen aus dem Telefonbuch für einen deutschsprachigen Benutzer realisiert werden. In dem Telefonbuch befinden sich neben überwiegend deutschsprachigen Namen auch einige fremdsprachige Namen. Ein Umsetzer für die graphemische Darstellung der Namen ist auf die Sprachen Deutsch, Italienisch, Tschechich, Griechisch, Türkisch eingestellt, insgesamt als N = 5 verschiedene Sprachen.

In einem Anfangsschritt S0 wird eine Sprachidentifikation der zugeführten Worte 10 bzw. Einträge des Telefonbuchs vorgenommen. Genauer gesagt wird jedes einzelne Wort auf die Wahrscheinlichkeit der Zugehörigkeit zu einer der fünf Sprachen analysiert. Wird beispielsweise ein deutscher Name verarbeitet, so wird die Wahrscheinlichkeit für Deutsch sehr hoch sein, für die anderen vier Sprachen, nämlich Italienisch, Tschechisch, Griechisch und Türkisch dagegen sehr viel niedriger. Anhand der pro Wort ermittelten Wahrscheinlichkeiten wird die Sprache mit der geringsten Wahrscheinlichkeit für die weitere Verarbeitung weggelassen. Das bedeutet, daß im nachfolgenden Verarbeitungsgang nur noch vier, anstatt fünf Sprachen verarbeitet werden müssen.

In einem ersten Verfahrensschritt S1 wird für jedes Wort die phonetische Umschrift für jede der vier verschiedenen Sprachen ermittelt. Dadurch werden für jedes Wort vier Phonemfolgen entsprechend vier ersten Aussprachevarianten erhalten.

In einem zweiten Verfahrensschritt S2 wird anschließend eine Abbildung der Phoneme jeder der vier Sprachen auf den jeweiligen Phonemsatz der Muttersprache implementiert.

Diese Abbildung wird in einem dritten Verfahrensschritt S3 auf die im ersten Verfahrensschritt S1 erhaltenen vier ersten Phonemfolgen 12 angewandt. Hierdurch werden für jedes Wort vier zweite Phonemfolgen 14 entsprechend vier zweiten Aussprachevarianten erhalten. Die vier zweiten Phonemfolgen 14 können bereits mit einem Muttersprachen-Spracherkenner erkannt werden.

Um allerdings den Verarbeitungsaufwand für den Spracherkenner weiter zu reduzieren, wird pro Wort jede zweite Phonemfolge mittels der Levenshtein-Distanz analysiert und klassifiziert (Schritt S4). Anschließend folgt ein fünfter Verfahrensschritt S5, in dem die analysierten und klassifizierten zweiten Phonemfolgen pro Wort auf drei Phonemfolgen reduziert werden.

Schließlich wird in einem letzten Schritt S6 ein Spracherkenner-Vokabular mit dem in dem fünften Verfahrensschritt S5 erhaltenen drei zweiten Phonemfolgen pro Wort für den Muttersprachen-Spracherkenner erstellt. Durch die nochmalige Reduktion der Phonemfolgen im fünften Verfahrensschritt S5 wird also das zu speichernde und während einer Spracherkennung zu durchsuchende Spracherkenner-Vokabular merklich reduziert. Dies bringt in einer praktischen Anwendung der Spracherkennung einerseits den Vorteil eines geringeren Speicherplatzbedarfs und andererseits einer schnelleren Verarbeitung, da ein kleineres Vokabular durchsucht werden muß.

Nach Ablauf des beschriebenen Verfahrens kann der Benutzer mittels Spracherkennung eine Namenswahl, also den sprachgesteuerten Aufruf gespeicherter Rufnummern über den Namen des Teilnehmers vornehmen, ohne daß er den Namen des zu rufenden Teilnehmers explizit einmal vorsprechen, also trainieren, muß.

Im folgenden wird kurz erläutert, was der Benutzer des Mobiltelefons zur Verbesserung der Spracherkennung tun kann. Sollte er einmal feststellen, daß ein bestimmter Name nicht gut erkannt wird, kann er das Spracherkenner-Menü seines Mobiltelefons aufrufen und dort die Anwendung "Namenswahl" auswählen. Unter dieser Anwendung kann ihm nun eine oder auch mehrere Möglichkeiten angeboten werden, um die Spracherkennung eines bestimmten Wortes, genauer gesagt eines bestimmten Namens aus dem elektronischen Telefonbuch des Mobiltelefons zu verbessern. Im folgenden werden beispielhaft einige dieser Möglichkeiten kurz erläutert:
1. Der Benutzer kann das schlecht oder gar nicht erkannte Wort nochmals in das Mobiltelefon einsprechen und anschließend durch den im Mobiltelefon enthaltenen Spracherkenner in eine Phonemfolge umsetzen lassen. In diesem Fall werden vorher automatisch ermittelte Aussprachevarianten ganz oder teilweise, je nachdem welche Nähe sie zu der neu ermittelten Phonemfolge besitzen, aus dem Vokabular des Spracherkenners entfernt.
2. Alternativ kann sich der Benutzer auf dem Display des Mobiltelefons eine Art Lautschrift des schlecht oder gar nicht erkannten Eintrags des elektronischen Telefonbuchs anzeigen lassen. Die Art Lautschrift kann der Benutzer dann bei Nichtzutreffen, d. h. bei schlechter Übereinstimmung mit seiner Aussprache, editieren. Beispielsweise kann durch die automatische Umsetzung des Eintrags "Jacques Chirac" als Lautschrift "Jakwes Schirack" gespeichert sein. Erscheint nun dem Benutzer diese Lautschrift als fehlerhaft, kann er sie mittels seines Mobiltelefons editieren, beispielsweise zu "Schack Schirack". Anschließend kann das System dazu die phonetische Beschreibung ermittelt und diese ins Spracherkenner-Vokabular neu aufnehmen. Damit sollte die automatische Spracherkennung zuverlässig funktionieren.
3. Schließlich kann der Benutzer durch eine explizite Angabe der Sprache, aus der ein fehlerhaft oder gar nicht erkannter Name stammt oder durch explizite Auswahl einer bestimmten Sprache für einen bestimmten Namen die Erkennung wesentlich verbessern. In einem derartigen Fall werden alle Aussprachevarianten für den Namen aus dem Spracherkenner-Vokabular entfernt, die nicht der explizit angegeben Sprache zugeordnet sind.

Die Erfindung kann auch vorteilhaft in anderen mobilen Geräten außer einem Mobiltelefon z. B. einem Personal Assistant oder auch einem Personal Computer verwendet, d. h. eingesetzt werden.

## Patentansprüche

1. Betriebsverfahren eines automatischen Spracherkenners zur sprecherunabhängigen Spracherkennung von Worten (10) aus verschiedenen Sprachen, insbesondere zur Erkennung von Namen aus verschiedenen Sprachen, das von einer als Muttersprache definierten Sprache ausgeht und eine Eingabephase zur Erstellung eines Spracherkenner-Vokabulars mit den folgenden Schritte aufweist:
(a) Ermitteln der phonetischen Umschriften von Wörtern jeweils für N verschiedene Sprachen, um pro Wort N erste Phonemfolgen (12) entsprechend N ersten Aussprachevarianten zu erhalten (S1),
(b) Implementieren einer Abbildung der Phoneme jeder Sprache auf den jeweiligen Phonemsatz der Muttersprache (S2),
(c1) Anwenden der in Schritt (b) implementierten Abbildung auf die in Schritt (a) ermittelten N ersten Phonemfolgen (12) für jedes Wort, wodurch pro Wort N zweite Phonemfolgen (14) entsprechend N zweiten Aussprachevarianten erhalten werden, die mit einem Muttersprachen-Spracherkenner erkannt werden können (S3), und
(d) Erstellen eines Spracherkenner-Vorkabulars mit den im vorhergehenden Schritt erhaltenen N zweiten Phonemfolgen pro Wort für den Muttersprachen-Spracherkenner (S6).

2. Betriebsverfahren nach Anspruch 1,
ferner **gekennzeichnet durch** die folgenden, vor dem Schritt (d) und nach dem Schritt (c1) auszuführenden Schritte:
(c2) Bearbeiten der N zweiten Phonemfolgen (14) entsprechend den N zweiten Aussprachevarianten jedes Wortes, indem
(c21) jede zweite Phonemfolge (14) mittels geeigneter Distanzen, insbesondere der Levenshtein-Distanz, analysiert und klassifiziert wird (S4), und
(c22) die N zweiten Phonemfolgen jedes Wortes auf wenige, vorzugsweise 2 bis 3, Phonemfolgen reduziert werden (S5).

3. Betriebsverfahren nach Anspruch 1 oder 2,
**dadurch gekennzeichnet, dass**
vor dem Schritt (a) eine Sprachidentifikation vorgenommen wird, durch die für jedes zu erkennende Wort die Wahrscheinlichkeit der Zugehörigkeit zu jeder der N verschiedenen Sprachen bestimmt wird, und anhand des Ergebnisses der Sprachidentifikation die Anzahl der in Schritt (a) zu verarbeitenden Sprachen, vorzugsweise auf 2 bis 3 verschiedene Sprachen, reduziert werden, indem die Sprachen mit der geringsten Wahrscheinlichkeit nicht weiter verarbeitet werden (S0).

4. Betriebsverfahren nach einem der Ansprüche 1 bis 3,
**dadurch gekennzeichnet, dass**
das Ermitteln der phonetischen Umschriften in Schritt (a) durch mindestens ein neuronales Netz erfolgt.

5. Betriebsverfahren nach einem der Ansprüche 1 bis 4,
**dadurch gekennzeichnet, dass**
als Muttersprachen-Spracherkenner ein Hidden-Markov-Modell eingesetzt wird, das für die als Muttersprache definierte Sprache erstellt worden ist.

6. Automatischer Spracherkenner zur sprecherunabhängigen Spracherkennung von Worten aus verschiedenen Sprachen, insbesondere zur Erkennung von Namen aus verschiedenen Sprachen, wobei eine der verschiedenen Sprachen als Muttersprache definiert ist, mit
- einem Muttersprachen-Spracherkenner,
- einem ersten Verarbeitungsmodul zum Ermitteln der phonetischen Umschriften von Wörtern jeweils für N verschiedene Sprachen, um pro Wort N erste Phonemfolgen entsprechend N ersten Aussprachevarianten zu erhalten,
- einem zweiten Verarbeitungsmodul zum Implementieren einer Abbildung der Phoneme jeder Sprache auf den jeweiligen Phonemsatz der Muttersprache,
- einem dritten Verarbeitungsmodul zum Anwenden der mit dem zweiten Verarbeitungsmodul implementierten Abbildung auf die mit dem ersten Verarbeitungsmodul ermittelten N ersten Phonemfolgen für jedes Wort, wodurch pro Wort N zweite Phonemfolgen entsprechend N zweiten Aussprachevarianten erhalten werden, die mit dem Muttersprachen-Spracherkenner erkannt werden können, und
- einem vierten Verarbeitungsmodul zum Erstellen eines Spracherkenner-Vorkabulars mit den durch das dritte Verarbeitungsmodul erhaltenen N zweiten Phonemfolgen pro Wort für den Muttersprachen-Spracherkenner.

7. Automatischer Spracherkenner nach Anspruch 6,
**gekennzeichnet durch**
ein fünftes Verarbeitungsmodul zum Bearbeiten der N zweiten Phonemfolgen entsprechend den N zweiten Aussprachevarianten jedes Wortes, das derart ausgebildet ist, dass jede zweite Phonemfolge mittels geeigneter Distanzen, insbesondere der Levenshtein-Distanz, analysiert und klassifiziert wird, und die N zweiten Phonemfolgen jedes Wortes auf wenige, vorzugsweise 2 bis 3, Phonemfolgen reduziert werden.

8. Automatischer Spracherkenner nach Anspruch 6 oder 7,
**gekennzeichnet durch**
einen Sprachidentifikator, der vor das erste Verarbeitungsmodul geschaltet ist und für jedes zu erkennende Wort die Wahrscheinlichkeit der Zugehörigkeit zu jeder der N verschiedenen Sprachen bestimmt, und einen Sprachreduzierer, der die Anzahl der vom ersten Verarbeitungsmodul zu verarbeitenden Sprachen, vorzugsweise auf 2 bis 3 verschiedene Sprachen, reduziert werden, indem die Sprachen mit der geringsten Wahrscheinlichkeit nicht weiter verarbeitet werden.

9. Automatischer Spracherkenner nach einem der Ansprüche 6 bis 8,
**dadurch gekennzeichnet, dass**
das erste Verarbeitungsmodul mindestens ein neuronales Netz zum Ermitteln der phonetischen Umschriften aufweist.

10. Automatischer Spracherkenner nach einem der Ansprüche 6 bis 9,
**dadurch gekennzeichnet, dass**
der Muttersprachen-Spracherkenner ein Hidden-Markov-Modell aufweist, das für die als Muttersprache definierte Sprache erstellt worden ist.

11. Verwendung des Betriebsverfahrens nach einem der Ansprüche 1 bis 5 und des automatischen Spracherkenners nach einem der Ansprüche 6 bis 10 in einem mobilen Gerät wie einem Mobiltelefon, Personal Digital Assistant oder einem Personal Computer.

## Claims

1. Operating method for an automated language recogniser for speaker-independent language recognition of words (10) from different languages, particularly for the recognition of names from different languages, that is based on a language defined as a mother tongue and has an input phase for creating a language recognition vocabulary, with the following steps:
(a) Determination of the phonetic transcripts of words for N various languages, in order to obtain N first phoneme sequences (12) per word corresponding to N first pronunciation variants (S1),
(b) Implementing a mapping of the phonemes of each language to the relevant phoneme set of the mother tongue (S2).
(c1) Using the mapping implemented in step (b) to the N first phoneme sequences (12) for each word determined in step (a), whereby for each word N second phoneme sequences (14) corresponding to N second pronunciation variants are obtained, that can be recognised by means of a mother tongue language recogniser (S3),
(d) Creation of a language recognition vocabulary with the N second phoneme sequences per word, obtained in the preceding step, for the mother tongue language recogniser (S6).

2. Operating method in accordance with claim 1,
further **characterised by** the following steps, to be performed before step (d) and after (c1):
(c2) Processing the N second phoneme sequences (14) corresponding to the N second pronunciation variants of each word, in that
(c21) each second phoneme sequence (14) is analysed and classified (S4) by means of suitable distances, particularly the Levenshtein distance, and
(c22) the N second phoneme sequences of each word are reduced to a few, preferably two to three, phoneme sequences (S5) .

3. Operating method in accordance with claim 1 or 2,
**characterised in that**
before step (a) a language identification is carried out by means of which, for each word to be recognised, the probability of belonging to each of the N different languages is determined and, based on the results of the language identification, the number of languages to be processed in step (a) is reduced, preferably to 2 to 3 different languages, **in that** the languages with the least probability are not further processed (S0).

4. Operating method in accordance with one of claims 1 to 3,
**characterised in that**
the determination of the phonetic transcripts in step (a) takes place by means of at least one neural network.

5. Operating method in accordance with one of claims 1 to 4,
**characterised in that**
a Hidden Markov model that has been created for the language defined as the mother tongue is used as the mother tongue language recogniser.

6. Automatic language recogniser for speaker-independent language recognition of words from various languages, particularly for recognition of names from various languages, whereby one of the different languages is defined as the mother tongue, with
- a mother tongue language recogniser,
- a first processing module for determining the phonetic transcripts of words for N various languages in each case, in order to obtain N first phoneme sequences for each word corresponding to N first pronunciation variants,
- a second processing module for implementing a mapping of the phonemes of each language to the particular phoneme set of the mother tongue,
- a third processing module for applying the mapping, implemented by means of the second processing module, to the N first phoneme sequences for each word determined by means of the first processing module, with N second phoneme sequences corresponding to N second pronunciation variants being obtained per word, that can be recognised by means of the mother tongue language recogniser, and
- a fourth processing module for creating a language recognisable vocabulary with the N second phoneme sequences per word, obtained by the third processing module, for the mother tongue language recogniser.

7. Automatic language recogniser in accordance with claim 6,
**characterised in that**
a fifth processing module for processing the N second phoneme sequences corresponding to the N second pronunciation variants of each word is designed in such a way that each second phoneme sequence is analysed and classified by means of suitable distances, particularly the Levenshtein distance, and the N second phoneme sequences of each word are reduced to a few, preferably 2 to 3, phoneme sequences.

8. Automatic language recogniser in accordance with claim 6 or 7,
**characterised by**
a language identifier that is connected before the first processing module and, for each word to be recognised, determines the probability of belonging to each of the N different languages, and a language reducer that reduces the number of languages from the first processing module to be processed, preferably to 2 to 3, in that the languages with the least probability are not further processed.

9. Automatic language recogniser in accordance with one of claims 6 to 8,
**characterised in that**
the first processing module has at least one neural network for determining the phonetic transcripts.

10. Automatic language recogniser in accordance with one of claims 6 to 9,
**characterised in that**
the mother tongue language recogniser has a Hidden Markov model that has been created for the language defined as the mother tongue.

11. Use of the operating method in accordance with one of claims 1 to 5 and of the automatic language recogniser in accordance with one of claims 6 to 10 in a mobile device such as a mobile telephone, personal digital assistant or personal computer.

## Revendications

1. Procédé d'exploitation d'un système de reconnaissance vocale automatique destiné à la reconnaissance vocale de mots (10) en différentes langues, indépendamment du locuteur, en particulier à la reconnaissance de noms en différentes langues, qui part d'une langue définie comme langue maternelle et présente une phase de saisie destinée à créer un vocabulaire pour le système de reconnaissance vocale qui comporte les étapes suivantes :
(a) détermination des transcriptions phonétiques de mots, à chaque fois pour N langues différentes, afin d'obtenir N premières suites de phonèmes (12) par mot en fonction des N premières variantes de prononciation (S1),
(b) mise en oeuvre d'une reproduction des phonèmes de chaque langue sur l'ensemble respectif de phonèmes de la langue maternelle (S2),
(c1) application de la reproduction mise en oeuvre au cours de l'étape (b) sur les N premières suites de phonèmes (12) déterminées au cours de l'étape (a) pour chaque mot, ce qui permet d'obtenir, par mot, N deuxièmes suites de phonèmes (14) en fonction des N deuxièmes variantes de prononciation qui peuvent être reconnues avec un système de reconnaissance vocale de langues maternelles (S3), et
(d) création d'un vocabulaire pour le système de reconnaissance vocale avec les N deuxièmes suites de phonèmes par mot obtenues au cours de l'étape précédente pour le système de reconnaissance vocale de langues maternelles (S6).

2. Procédé d'exploitation selon la revendication 1,
**caractérisé en outre par** les étapes suivantes, qui doivent être réalisées avant l'étape (d) et après l'étape (c1) :
(c2) traitement des N deuxièmes suites de phonèmes (14) en fonction des N deuxièmes variantes de prononciation de chaque mot, dans lequel :
(c21) chaque deuxième suite de phonèmes (14) est analysée et classée au moyen de distances appropriées, en particulier la distance de Levenshtein (S4), et
(c22) les N deuxièmes suites de phonèmes de chaque mot sont réduites pour obtenir moins de suites de phonèmes, de préférence 2 à 3 (S5).

3. Procédé d'exploitation selon la revendication 1 ou 2,
**caractérisé en ce que**,
avant l'étape (a), on identifie la langue pour pouvoir définir, pour chaque mot à reconnaître, la probabilité de l'appartenance à chacune des N langues différentes, et on réduit, à l'aide du résultat de l'identification de la langue, le nombre de langues à traiter au cours de l'étape (a), de préférence à 2 ou 3 langues différentes, en cessant de traiter les langues ayant la probabilité la plus faible (S0).

4. Procédé d'exploitation selon l'une des revendications 1 à 3,
**caractérisé en ce que**
les transcriptions phonétiques sont déterminées au cours de l'étape (a) par au moins un réseau neuronal.

5. Procédé d'exploitation selon l'une des revendications 1 à 4,
**caractérisé en ce que**
le système de reconnaissance vocale de langues maternelles utilisé est un modèle de Markov caché (Hidden Markov Model) qui a été créé pour la langue définie comme langue maternelle.

6. Système de reconnaissance vocale automatique destiné à la reconnaissance vocale de mots en différentes langues, indépendamment du locuteur, en particulier destiné à la reconnaissance de noms en différentes langues, l'une des langues différente étant définie comme langue maternelle, comprenant :
- un système de reconnaissance vocale de langues maternelles,
- un premier module de traitement destiné à déterminer les transcriptions phonétiques de mots à chaque fois pour N langues différentes, afin d'obtenir N premières suites de phonèmes par mot en fonction des N premières variantes de prononciation,
- un deuxième module de traitement destiné à mettre en oeuvre une reproduction des phonèmes de chaque langue sur l'ensemble respectif de phonèmes de la langue maternelle,
- un troisième module de traitement destiné à appliquer la reproduction mise en oeuvre avec le deuxième module de traitement sur les N premières suites de phonèmes déterminées avec le premier module de traitement pour chaque mot, ce qui permet d'obtenir par mot N deuxièmes suites de phonèmes en fonction des N deuxièmes variantes de prononciation qui peuvent être reconnues avec le système de reconnaissance vocale de langues maternelles, et
- un quatrième module de traitement destiné à créer un vocabulaire pour le système de reconnaissance vocale avec les N deuxièmes suites de phonèmes par mot obtenues par le troisième module de traitement pour le système de reconnaissance vocale de langues maternelles.

7. Système de reconnaissance vocale automatique selon la revendication 6,
**caractérisé par**
un cinquième module de traitement destiné à traiter les N deuxièmes suites de phonèmes en fonction des N deuxièmes variantes de prononciation de chaque mot, qui est réalisé de manière à analyser et classer chaque deuxième suite de phonèmes au moyen de distances appropriées, en particulier la distance de Levenshtein et à réduire les N deuxièmes suites de phonèmes de chaque mot pour obtenir moins de suites de phonèmes, de préférence de 2 à 3.

8. Système de reconnaissance vocale automatique selon la revendication 6 ou 7,
**caractérisé par**
un dispositif d'identification de la langue qui est raccordé en amont du premier module de traitement et définit, pour chaque mot à reconnaître, la probabilité de l'appartenance à chacune des N langues différentes et un dispositif de réduction de langues, qui réduit le nombre de langues à traiter par le premier module de traitement, de préférence à 2 ou 3 langues différentes en cessant de traiter les langues ayant la probabilité la plus faible.

9. Système de reconnaissance vocale automatique selon l'une des revendications 6 à 8,
**caractérisé en ce que**
le premier module de traitement présente au moins un réseau neuronal pour déterminer les transcriptions phonétiques.

10. Système de reconnaissance vocale automatique selon l'une des revendications 6 à 9,
**caractérisé en ce que**
le système de reconnaissance vocale de langues maternelles présente un modèle de Markov caché qui a été créé pour la langue définie comme langue maternelle.

11. Utilisation du procédé d'exploitation selon l'une des revendications 1 à 5 et du système de reconnaissance vocale automatique selon l'une des revendications 6 à 10 dans un appareil mobile, tel qu'un téléphone portable, un assistant numérique personnel ou un ordinateur personnel.
